# FASCICULE DE BREVET EUROPEEN

(11) **EP 2 553 222 B1**
(45) Date de publication et mention de la délivrance du brevet: **20.03.2019**
(21) Numéro de dépôt: 11718429.1
(22) Date de dépôt: 28.03.2011
(51) Int. Cl.: F01D 25/18, F16J 15/02, F16J 15/08

(54) **TUBE DE DEGAZAGE D'UN TURBOREACTEUR, PROCEDE DE MONTAGE D'UN TEL TUBE ET TURBOREACTEUR AVEC UN TEL TUBE**
ENTLÜFTUNGSROHR FÜR TL-TRIEBWERK, VERFAHREN ZUR MONTAGE EINES DERARTIGEN ROHRS UND MIT DIESEM ROHR AUSGESTATTETES TL-TRIEBWERK
TURBOJET VENTING PIPE, METHOD FOR MOUNTING ONE SUCH PIPE AND TURBOJET PROVIDED WITH ONE SUCH PIPE

(30) Priorité: 26.03.2010 FR 1052242; 26.03.2010 FR 1052239
(43) Date de publication de la demande: 06.02.2013
(73) Titulaire: Safran Aircraft Engines, 75015 Paris (FR)
(72) Inventeur: BRAULT, Michel, Gilbert, Roland, F-91480 Quincy sous Senart (FR); BOUILLER, Philippe, Pierre, Vincent, F-77210 Samoreau (FR)
(74) Mandataire: Gevers & Orès
(86) Numéro de dépôt international: PCT/FR2011/050676
(87) Numéro de publication internationale: WO 2011/117560

(56) Documents cités:
- FR-A1- 2 901 313
- US-A1- 2004 025 494

## Description

L'invention concerne un tube de dégazage d'un turboréacteur, un procédé de montage d'un tel tube et un turboréacteur avec un tel tube.

Un turbomoteur pour un aéronef comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz. A chaque compresseur peut correspondre une turbine, les deux étant reliés par un arbre, formant ainsi, par exemple, un corps haute pression et un corps basse pression.

Un turboréacteur présente généralement, sensiblement au niveau de l'extrémité amont du corps haute pression, une "enceinte amont" contenant des organes de type roulements et engrenages. Il présente par ailleurs, sensiblement au niveau de l'extrémité aval du corps haute pression, une "enceinte aval" contenant des organes de type roulements et engrenages. Ces enceintes sont baignées dans une atmosphère contenant de l'huile pour la lubrification des différents organes. Par ailleurs un flux de gaz les traverse, notamment à des fins de ventilation. Pour éviter que l'huile ne soit transportée par le flux de gaz hors des enceintes, les gaz sont évacués dans des "déshuileurs" généralement formés par des cheminées radiales ménagées dans l'arbre basse pression et sur la paroi desquelles l'huile est captée pour être réinjectée dans l'enceinte correspondante, par effet centrifuge. Les déshuileurs communiquent avec un tube dit de dégazage (également tournant) dans l'enceinte duquel les gaz sont transportés depuis les déshuileurs pour être éjectés en sortie du tube de dégazage, généralement au niveau de la tuyère du turboréacteur.

Le tube de dégazage s'étend au sein de l'arbre basse pression, concentriquement à lui, l'arbre basse pression s'étendant quant à lui au sein de l'arbre haute pression, concentriquement à lui. Le tube de dégazage tourne avec l'arbre basse pression ; il s'étend généralement sur une majeure partie de la dimension longitudinale de cet arbre. Le tube de dégazage permet de guider les gaz et notamment d'éviter le contact de gaz huilés avec l'arbre basse pression qui, en raison de la chaleur élevée de ce dernier, pourrait entraîner des phénomènes de cokéfaction de l'huile en suspension dans les gaz.

Dans la plupart des turboréacteurs connus, l'arbre basse pression présente une paroi d'épaisseur variable, la surface interne de sa paroi présentant un diamètre variable le long de l'arbre. L'homme du métier parle classiquement d'un arbre en forme dite de "bouteille" en raison de la forme de sa paroi interne ; la surface interne de la paroi d'un tel arbre présente un diamètre plus important dans sa zone centrale que dans ses portions d'extrémité.

Le tube de dégazage présente généralement une paroi d'épaisseur relativement fine au regard de l'épaisseur de la paroi de l'arbre basse pression. Du fait de son élancement, il a besoin d'un certain nombre d'appuis sur la surface interne de la paroi de l'arbre basse pression, non seulement à ses extrémités mais aussi en partie centrale. Se pose dès lors un problème de montage, puisque le tube de dégazage doit être monté par une extrémité de l'arbre, de diamètre inférieur au diamètre de sa partie centrale sur la surface interne de laquelle le tube doit néanmoins venir en appui pour assurer son maintien. Ce problème est résolu dans l'art antérieur en utilisant des systèmes de bagues coniques et d'écrous montés dans l'arbre avant le montage du tube. Ces systèmes sont complexes et nécessitent un jeu suffisant entre la surface externe de la paroi du tube de dégazage et la surface interne de la paroi de l'arbre basse pression.

Dans certains turboréacteurs récents, le diamètre de l'arbre haute pression est réduit par rapport à celui des turboréacteurs antérieurs. Le dimensionnement du moteur impose dès lors de prévoir, pour l'arbre basse pression, une paroi d'épaisseur constante avec des surfaces externe et interne de diamètres constants le long de la majeure partie de l'arbre, ces diamètres étant par ailleurs réduits par rapport à ceux des arbres de l'art antérieur. Le tube de dégazage doit quant à lui être de diamètre sensiblement égal à celui des tubes de dégazage de l'art antérieur, pour garantir l'évacuation d'un débit de gaz équivalent. De ce fait, l'espace entre la surface externe du tube de dégazage et la surface interne de l'arbre basse pression est faible et rend difficile le montage de points d'appuis. Pourtant, la présence de tels points d'appuis le long du tube de dégazage reste nécessaire au vu de son élancement (environ 2 mètres de longueur pour 60 millimètres de diamètre).

L'invention vise à proposer un tube de dégazage plus facile à monter. L'invention est née d'un problème pour les turboréacteurs avec peu de jeu entre le tube de dégazage et l'arbre basse pression ; toutefois, la Demanderesse n'entend pas limiter la portée de ses droits à cette seule application, l'invention s'appliquant plus généralement et pouvant procurer ses avantages dans tout type de turboréacteur.

C'est ainsi que l'invention concerne un tube dit de dégazage pour le guidage d'un flux de gaz dans un turboréacteur comportant au moins un arbre rotatif creux au sein duquel est destiné à être monté ledit tube, le tube s'étendant globalement suivant un axe, tube caractérisé par le fait qu'il comporte au moins deux tronçons de tube agencés pour être assemblés l'un à l'autre en alignement longitudinal en conservant un degré de liberté dans leur translation relative, au moins un tronçon étant pourvu de moyens déformables agencés pour se déformer radialement lors du serrage l'un contre l'autre des tronçons de tube dans l'arbre du turboréacteur, pour venir en appui sur l'arbre.

Grâce à l'invention, le montage du tube dans l'arbre est facilité, puisque c'est sous l'action du montage des deux tronçons de tube dans l'arbre que les moyens déformables se déforment radialement pour venir en appui sur l'arbre.

En particulier, les moyens déformables sont déformés radialement sous l'action d'un déplacement longitudinal relatif des deux tronçons l'un par rapport à l'autre.

Du fait de leur déformation radiale, le diamètre des moyens déformables est plus grand après montage qu'avant montage ; l'emmanchement des tronçons de tube dans l'arbre se fait ainsi avec un diamètre minimal des moyens déformables (et est donc facilité) tandis que la finalisation du montage voit les moyens déformables se déformer radialement pour venir en appui sur l'arbre pour le maintien du tube dans ce dernier. On peut ainsi aisément installer un tube de dégazage dans un volume réduit à l'intérieur de l'arbre, sans supports intermédiaires, tout en optimisant sa section pour une bonne circulation du flux de gaz et une bonne répartition des pressions.

De préférence, les moyens déformables sont agencés à une extrémité dudit tronçon.

Selon une forme de réalisation, les moyens déformables présentent, avant montage, un diamètre inférieur au diamètre interne de l'arbre. Le montage est donc facilité puisqu'il peut se faire sans contact entre les moyens déformables et l'arbre.

Selon une forme de réalisation, les moyens déformables comportent une bague formée en matériau déformable.

Selon une forme de réalisation dans ce cas, la bague est formée en élastomère; un tel matériau est bien adapté à une application à un turboréacteur.

Selon une autre forme de réalisation dans ce cas, la bague se présente sous la forme d'une lame métallique annulaire bombée déformable, par exemple formée en alliage de nickel comme l'Inconel X750 (marque déposée).

Selon une forme de réalisation, une extrémité d'un premier tronçon comporte un rebord radial d'appui pour la bague et un second tronçon comporte une portion d'extrémité agencée pour venir en appui sur la bague pour la comprimer longitudinalement contre le rebord radial et ainsi la déformer radialement. Un tel dispositif est aisé à fabriquer et à mettre en place.

Selon une forme de réalisation, les tronçons comportent des moyens de blocage en rotation l'un par rapport à l'autre (ou les uns par rapport aux autres) en position assemblée. Il est ainsi simple de solidariser l'ensemble à l'arbre rotatif.

Selon une forme de réalisation, le tube comporte plus de deux tronçons de tube.

Selon une forme de réalisation, les tronçons de tube sont agencés pour être assemblés l'un à l'autre concomitamment à leur montage dans l'arbre, les moyens déformables étant agencés pour être déformés au cours de cet assemblage.

Selon une forme de réalisation, les tronçons de tube sont agencés pour être assemblés préalablement à leur montage dans l'arbre ; ainsi pré-assemblés, les tronçons de tube forment un ensemble unitaire de deux éléments ou plus, reliés entre eux. De la sorte, il est facile de manipuler d'un bloc le tube pré-assemblé pour son montage dans l'arbre, ce montage étant donc moins complexe, plus rapide et moins onéreux notamment en coût d'outillage. En outre, la maintenance de l'ensemble est facilitée puisqu'il est aisé de retirer l'ensemble du tube de l'arbre.

Dans ce cas, les tronçons sont assemblés l'un à l'autre puis montés dans l'arbre, la déformation des moyens déformables pour venir en contact avec l'arbre se produisant lors de ce montage dans l'arbre.

L'invention concerne encore un turboréacteur comportant au moins un arbre rotatif creux au sein duquel est destiné à être monté un tube dit de dégazage pour le guidage d'un flux de gaz, le tube s'étendant globalement suivant un axe, tube caractérisé par le fait qu'il comporte les caractéristiques du tube présenté ci-dessus.

L'invention concerne un procédé de montage d'un tube dit de dégazage pour le guidage d'un flux de gaz au sein d'un arbre rotatif creux d'un turboréacteur, le tube étant destiné à s'étendre globalement suivant un axe et comportant au moins deux tronçons de tube agencés pour être assemblés l'un à l'autre en alignement longitudinal en conservant un degré de liberté dans leur translation relative, au moins un tronçon étant pourvu de moyens déformables agencés pour se déformer radialement lors du serrage l'un contre l'autre des tronçons de tube, procédé caractérisé par le fait qu'il comporte les étapes suivantes :
- on monte le tube au sein de l'arbre et
- on déforme radialement, par serrage desdits tronçons l'un contre l'autre, les moyens déformables jusqu'à ce qu'ils viennent en appui sur l'arbre du turboréacteur pour le maintien du tube dans ce dernier.

Ce procédé présente les mêmes avantages que le tube décrit ci-dessus.

Selon une forme de réalisation, on assemble les tronçons de tube l'un à l'autre concomitamment à leur montage dans l'arbre et on déforme les moyens déformables au cours de cet assemblage.

Selon une autre forme de réalisation, on assemble les tronçons de tube l'un à l'autre préalablement à leur montage dans l'arbre. Dans ce cas, les tronçons sont assemblés l'un à l'autre puis le tube avec ses deux tronçons est monté dans l'arbre, la déformation des moyens déformables pour venir en contact avec l'arbre se produisant lors de ce montage.

Le procédé peut avantageusement être mis en oeuvre avec le tube présenté ci-dessus.

L'invention sera mieux comprise à l'aide de la description suivante de la forme de réalisation préférée du tube de dégazage, du turboréacteur et du procédé de montage conformes aux formes de réalisation préférées de l'invention, en référence aux planches de dessins annexées, sur lesquelles :

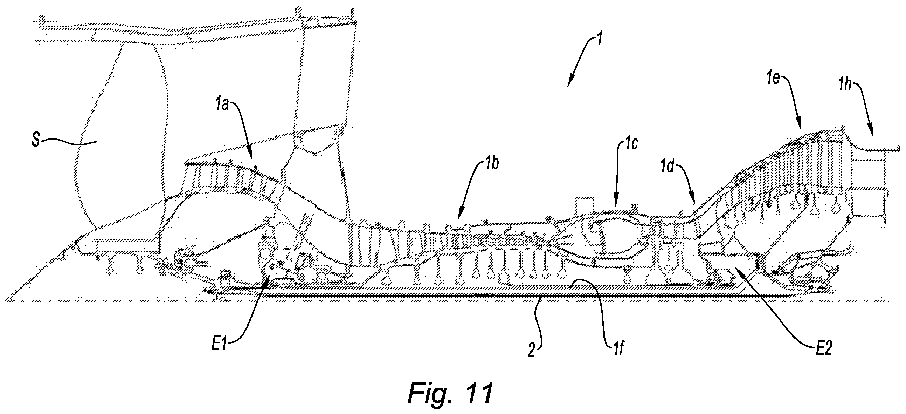

- la figure 11 représente une vue générale en coupe du turboréacteur conforme à une première forme de réalisation de l'invention ;
- la figure 1 représente une vue en coupe schématique de l'arbre basse pression et du tube de dégazage du turboréacteur de la figure 11 ;
- la figure 2 représente une vue détaillée de la portion aval de l'arbre basse pression de la figure 1 lors d'une première étape du procédé de montage de son tube de dégazage ;
- la figure 3 représente une vue en coupe de la zone d'aboutement des tronçons du tube de dégazage de l'arbre basse pression de la figure 1 lors d'une deuxième étape de son procédé de montage ;
- la figure 4 représente une vue en coupe de la zone d'aboutement des tronçons du tube de dégazage de l'arbre basse pression de la figure 1 lors d'une troisième étape de son procédé de montage ;
- la figure 5 représente une vue en coupe de la zone d'aboutement des tronçons du tube de dégazage de l'arbre basse pression de la figure 1 lors d'une quatrième étape de son procédé de montage ;
- la figure 6 représente une vue en coupe de la zone amont de l'arbre basse pression de la figure 1 ;
- la figure 7 représente une vue en coupe de la zone d'aboutement des tronçons d'un tube de dégazage conforme à une deuxième forme de réalisation préférée de l'invention ;
- la figure 8 représente une vue en coupe de la zone d'aboutement des tronçons d'un tube de dégazage conforme à une troisième forme de réalisation préférée de l'invention ;
- la figure 9 représente une vue en coupe de la zone d'aboutement des tronçons d'un tube de dégazage conforme à une quatrième forme de réalisation préférée de l'invention ;
- la figure 10 représente une vue en coupe d'une part de la zone d'aboutement et d'autre part de la portion amont des tronçons d'un tube de dégazage conforme à une cinquième forme de réalisation préférée de l'invention ;
- la figure 12 représente une vue en coupe schématique d'un tube de dégazage conforme à une sixième forme de réalisation de l'invention ;
- la figure 13 est une vue en coupe de la zone d'aboutement des tronçons amont et intermédiaire du tube de dégazage de la figure 12, la partie inférieure de la figure 13 montrant cette zone d'aboutement avant compression du moyen déformable et la partie supérieure de la figure 13 montrant cette zone d'aboutement après compression du moyen déformable ;
- la figure 14 représente une vue en coupe schématique de l'arbre basse pression et du tube de dégazage de la figure 12 ;
- la figure 15a représente une vue en coupe schématique de l'embout amont du tube de dégazage de la figure 12, monté dans l'arbre basse pression ;
- la figure 15b représente une vue en coupe schématique de la partie aval du tube de dégazage de la figure 12, monté dans l'arbre basse pression ;
- la figure 16 représente une vue en perspective schématique du tube de la figure 12 ;
- la figure 17 représente une vue en perspective schématique et partiellement en transparence d'un tube de dégazage conforme à une septième forme de réalisation de l'invention ;
- la figure 18 représente une vue schématique en coupe transversale du tube de la figure 17 ;
- la figure 19 représente une vue partielle schématique en coupe longitudinale du tube de la figure 17 ;
- la figure 20 représente une vue schématique en coupe transversale d'un tube de dégazage conforme à une huitième forme de réalisation de l'invention ;
- la figure 21 représente une vue schématique en coupe du tube de la figure 20 et
- la figure 22 représente une vue en coupe longitudinale de la zone d'aboutement des tronçons d'un tube de dégazage conforme à une neuvième forme de réalisation de l'invention, la partie inférieure de la figure 21 montrant cette zone d'aboutement avant compression du moyen déformable et la partie supérieure de la figure 21 montrant cette zone d'aboutement après compression du moyen déformable.

En référence à la figure 11, un turboréacteur 1 conforme à une première forme de réalisation de l'invention comporte, de manière classique, une soufflante S, un compresseur basse pression la, un compresseur haute pression 1b, une chambre de combustion 1c, une turbine haute pression 1d, une turbine basse pression le et une tuyère d'échappement 1h. Le compresseur haute pression 1b et la turbine haute pression 1d sont reliés par un arbre haute pression 1f et forment avec lui un corps haute pression. Le compresseur basse pression la et la turbine basse pression le sont reliés par un arbre basse pression 2 et forment avec lui un corps basse pression. Le turboréacteur 1 présente, sensiblement au niveau de l'extrémité amont du corps haute pression, une "enceinte amont" E1 contenant des organes de type roulements et engrenages et, sensiblement au niveau de l'extrémité aval du corps haute pression, une "enceinte aval" E2 contenant des organes de type roulements.

L'arbre basse pression 2 s'étend suivant un axe A qui est l'axe global du turboréacteur 1. Dans la suite de la description, les notions de longitudinal ou radial sont relatives à cet axe A.

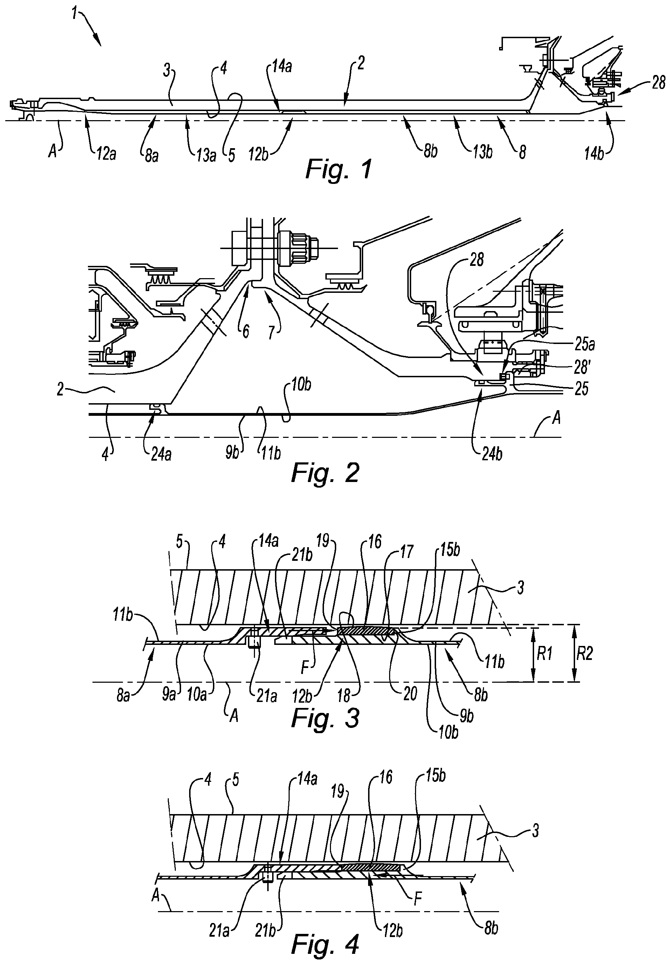

En référence à la figure 1, l'arbre basse pression 2 est creux. Il comporte une paroi 3 avec une surface interne 4 et une surface externe 5. Sa paroi 3 présente, sur une grande partie de sa longueur, une forme cylindrique c'est-à-dire que sa surface interne 4 et sa surface externe 5 présentent chacune un rayon constant ; en l'espèce, les rayons des surfaces interne 4 et externe 5 sont constants sur toute la portion centrale de l'arbre 2 hormis à ses extrémités.

En référence à la figure 2, à son extrémité aval, l'arbre basse pression 2 comporte une portion dont le diamètre augmente rapidement vers l'aval et se termine par une bride 6 de fixation à une bride 7 reliant le tourillon 28 de la turbine basse pression le à l'arbre basse pression 2, de manière connue.

Au sein de l'arbre basse pression 2 et concentriquement à lui s'étend un tube de dégazage 8 dont la fonction est de guider vers l'aval des flux de gaz en provenance de l'enceinte amont E1 du turboréacteur, cette fonction étant connue, comme expliqué en introduction.

Le tube de dégazage 8 s'étend suivant l'axe A du turboréacteur 1. Il est creux et à symétrie de révolution, en l'espèce de forme globalement cylindrique. Il comporte une pluralité de tronçons, en l'espèce deux tronçons 8a, 8b, un tronçon amont 8a et un tronçon aval 8b. Chacun de ses tronçons 8a, 8b est creux et comporte une paroi 9a, 9b avec une surface interne 10a, 10b et une surface externe 11a, 11b. Les tronçons 8a, 8b sont agencés pour être assemblés l'un à l'autre, en l'espèce au niveau de la partie centrale de l'arbre basse pression 2.

Chaque tronçon 8a, 8b (figure 1) comporte une portion d'extrémité amont 12a, 12b, une portion centrale 13a, 13b et une portion d'extrémité aval 14a, 14b. La portion centrale 13a, 13b de chacun des tronçons 8a, 8b est ici de forme cylindrique et régulière, seules les portions d'extrémités amont 12a, 12b et aval 14a, 14b présentant des formes particulières pour l'assemblage à un autre tronçon ou à l'arbre basse pression 2.

Plus précisément, le tronçon amont 8a comporte, à son extrémité aval, une jupe d'extrémité aval 14a (formant sa portion d'extrémité aval 14a) de diamètre légèrement supérieur au diamètre de sa partie centrale 13a ; plus précisément, la surface interne 10a de la paroi 9a du tronçon amont 8a au niveau de la jupe 14a est de diamètre supérieur à son diamètre dans la partie centrale 13a du tronçon 8a. L'épaisseur de la paroi 9a du tronçon 8a au niveau de la jupe 14a est également légèrement supérieure à son épaisseur dans la partie centrale 13a du tronçon 8a.

La portion d'extrémité amont 12b du tronçon aval 8b est d'épaisseur plus importante que celle de sa partie centrale 13b. Le tronçon aval 8b comporte par ailleurs, à l'extrémité aval de sa portion d'extrémité amont 12b, un rebord radial 15b.

Les tronçons amont 8a et aval 8b sont agencés pour être assemblés l'un avec l'autre en alignement longitudinal, c'est-à-dire aboutés l'un à l'autre et plus précisément emmanchés au niveau de leurs portions d'extrémités aval 14a et amont 12b, respectivement. En l'espèce, la portion d'extrémité amont 12b du tronçon aval 8b est emmanchée dans la jupe d'extrémité aval 14a du tronçon amont 8a, le diamètre de la surface interne 10a de la paroi 9a du tronçon amont 8a au niveau de sa jupe 14a étant sensiblement égal (légèrement supérieur) au diamètre de la surface externe 11b de la paroi 9b du tronçon aval 8b au niveau de sa portion d'extrémité amont 12b.

Une bague 16 en matériau déformable est montée à l'interface entre les tronçons 8a, 8b. Il s'agit ici d'une bague en élastomère, par exemple un élastomère de type fluorocarbone (par exemple de catégorie 64C8, 64C6 ou 60C7), un élastomère de type nitrile (par exemple de catégorie 21A7 ou 21A8), un élastomère de type éthylène propylène (par exemple de catégorie 41B8) ou un élastomère de type polyuréthane. Le matériau formant la bague 16 est choisi en fonction de ses caractéristiques mécaniques (déformation, dureté, tenue en température), de sa compatibilité avec divers fluides (tels que l'huile synthétique et le carburant) et de sa résistance aux agents atmosphériques. D'autres matériaux satisfaisant aux contraintes définies par l'homme du métier peuvent bien entendu convenir, s'ils sont déformables.

La bague 16 présente une surface interne 17, une surface externe 18, une surface amont 19 et une surface aval 20. En l'espèce, la bague 16 est préformée pour que sa surface externe 18 présente une forme bombée. Plus précisément en l'espèce, la bague 16 est emmanchée sur la portion d'extrémité amont 12b du tronçon aval 8b, sa surface aval 20 en appui (et en l'espèce collée) sur la surface amont du rebord 15b. La bague 16 peut être montée à force sur le tronçon aval 8b ou montée avec jeu, avec ou sans collage.

La bague 16 est agencée pour que sa surface externe 18 présente, avant assemblage des tronçons 8a, 8b l'un à l'autre, un rayon R1 inférieur au rayon R2 de la surface interne 4 de l'arbre basse pression 2, en l'espèce un rayon R1 sensiblement égal (légèrement supérieur en partie centrale) au rayon externe du rebord 15b. Autrement dit, la bague 16 est agencée pour être montée avec jeu dans l'arbre basse pression 2. La bague 16 est agencée pour être déformée lors de l'assemblage des tronçons 8a, 8b l'un à l'autre pour venir en appui sur l'arbre basse pression 2 et former ainsi une portion d'appui du tube de dégazage 8 sur l'arbre basse pression 2. Plus précisément, la bague 16 est agencée pour que sa surface externe 18 vienne en appui sur la surface interne 4 de l'arbre basse pression 2. Cette déformation est le résultat de la compression de la bague 16 lors de l'emmanchement du tronçon amont 8a avec le tronçon aval 8b, les rayons de leurs portions emmanchées (portion aval 14a du tronçon amont 8a et portion amont 12b du tronçon aval 8b) étant conformés de telle sorte que leur emmanchement par translation longitudinale relative ne soit possible qu'en déplaçant la surface amont 19 de la bague 16 en translation vers l'aval, la surface aval 20 étant quant à elle bloquée en translation longitudinale par le rebord radial 15b, ce qui impose une déformation radiale à la bague 16. Autrement dit, la bague 16 est déformée radialement du fait d'un effort de compression longitudinale de la bague 16 entre les tronçons 8a, 8b et plus précisément entre l'extrémité aval du tronçon amont 8a et le rebord 15b du tronçon aval 8b.

Le procédé de montage du tube de dégazage 8 dans l'arbre basse pression 2 va maintenant être décrit plus en détails, en référence plus particulièrement aux figures 2 à 5.

En référence à la figure 2, dans une première étape, le tronçon aval 8b est monté dans l'arbre basse pression 2, par la partie aval de ce dernier. Le tronçon aval 8b comporte au moins un moyen d'étanchéité, en l'espèce deux joints circonférentiels 24a, 24b agencées pour venir en appui sur des portées correspondantes de la surface interne 4 de l'arbre basse pression 2. Plus précisément, le deuxième joint 24b est en appui sur le tourillon 28 de turbine basse pression le relié à l'arbre basse pression 2 par l'intermédiaire des brides de fixation 6, 7. Le tronçon aval 8b comporte une nervure circonférentielle 25 de butée agencée pour venir en butée sur le tourillon 28 de turbine basse pression le. Grâce en l'espèce à un système 25a avec des pions et des évidements, la butée de la nervure 25 sur le tourillon 28 de turbine basse pression le permet de remplir une fonction anti-rotation c'est-à-dire d'interdire la rotation du tronçon aval 8b par rapport à l'arbre basse pression 2, par l'intermédiaire du tourillon 28 de turbine basse pression le. Par ailleurs, le tronçon aval 8b est bloqué en translation par rapport à l'arbre basse pression 2 par un écrou 28' qui bloque en translation vers l'aval sa butée 25.

Dans une deuxième étape, en référence à la figure 3, le tronçon amont 8a est emmanché par l'extrémité amont de l'arbre basse pression 2 et translaté en direction du tronçon aval 8b, comme indiqué par la flèche F. Plus précisément en l'espèce, après que le tronçon aval 8b a été monté dans l'arbre basse pression 2, le tronçon amont 8a est inséré par translation dans l'arbre basse pression 2 et, au cours de cette translation, son extrémité aval 14a se rapproche de l'extrémité 12b du tronçon aval 8b.

Dans une troisième étape, en référence à la figure 4, les tronçons 8a, 8b sont encore rapprochés l'un de l'autre par translation relative et l'extrémité aval de la portion d'extrémité aval 14a du tronçon amont 8a vient en contact avec la surface amont 19 de la bague 16.

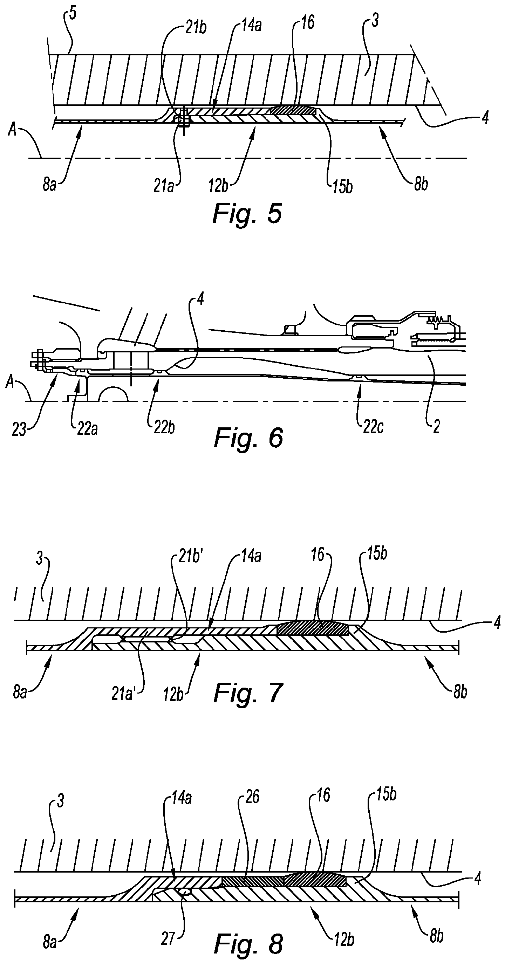

Dans une quatrième étape, en référence à la figure 5, la translation est poursuivie et l'extrémité aval de la portion d'extrémité aval 14a du tronçon amont 8a appuie sur la bague 16 (et plus précisément sur sa surface amont 19) ce qui a pour conséquence de déformer radialement la bague 16, dont le rayon de la surface externe 18 augmente en conséquence, comme expliqué plus haut. La translation des tronçons 8a, 8b l'un par rapport à l'autre est poursuivi jusqu'à ce que la surface externe 18 de la bague 16 vienne en appui contre la surface interne 4 de l'arbre basse pression 2, comme on le voit sur la figure 5, cet appui étant dimensionné pour s'exercer le long d'une surface suffisante pour remplir la fonction qui lui est assignée ; en l'espèce, la position des tronçons 8a, 8b l'un par rapport à l'autre (et donc la compression de la bague 16) est réglée par butée de l'extrémité amont de la portion amont 12b du tronçon aval 8b sur une surface d'appui correspondante de l'extrémité aval de la portion aval 14a du tronçon amont 8a).

Pour faciliter et guider la translation des tronçons amont 8a et aval 8b l'un par rapport à l'autre, on peut utiliser un outil de guidage, par exemple un tube interne de même diamètre que le diamètre interne le plus faible des tronçons amont 8a et aval 8b, l'outil de guidage étant retiré après montage des tronçons amont 8a et aval 8b.

Les tronçons 8a, 8b sont agencés pour être solidaires en rotation après leur assemblage ; ils possèdent à cet effet des moyens de solidarisation en rotation. En l'espèce, la portion d'extrémité aval 14a du tronçon amont 8a comporte un pion 21a agencé pour être logé dans une encoche 21b de la portion d'extrémité amont 12b du tronçon aval 8b, pour solidariser les tronçons 8a, 8b en rotation. Le pion 21a est en l'espèce serti dans un logement adapté de la portion d'extrémité aval 14a du tronçon amont 8a. Pour pouvoir assembler les tronçons 8a, 8b ensemble et plus précisément emmancher l'une avec l'autre leurs portions d'extrémités aval 14a et amont 12b, le pion anti-rotation 21a et son encoche de logement 21b doivent être alignés, pour que le pion 21a puisse être reçu dans l'encoche 21b, à défaut de quoi le pion 21a empêche tout mouvement de translation des tronçons 8a, 8b l'un vers l'autre une fois qu'il est en contact avec l'extrémité amont de la portion amont 12b du tronçon aval 8b. Ainsi, lors de la troisième étape (ou de la quatrième), le tronçon aval 8b est, si nécessaire, entraîné en rotation autour de son axe A pour aligner le pion 21a et l'encoche 21b. En l'espèce, sur la représentation de la figure 4 (début du contact entre l'extrémité aval du tronçon amont 8a et la surface amont 19 de la bague 16), le pion 21a n'a pas encore commencé à être inséré dans son encoche de logement 21b mais est à proximité de cette dernière ; c'est donc lors de la quatrième étape décrite ci-dessus que le pion 21a est inséré dans son logement 21b.

Conformément à une forme de réalisation non représentée, le tronçon aval 8b comporte une pluralité d'encoches 21b ; il est ainsi plus facile d'aligner le pion 21a avec une encoche 21b ; des encoches 21b peuvent être réparties sur toute la périphérie du tronçon 8b ou seulement sur une portion de celle-ci.

En référence à la figure 6, une fois la position souhaitée pour le tronçon amont 8a atteinte, ce dernier est bloqué en translation par rapport à l'arbre basse pression 2 grâce à un écrou 23 fixé à son extrémité amont. Cet écrou 23 de blocage axial peut également remplir une fonction de blocage en rotation. On note sur la figure 6 que la portion amont 12a du tronçon amont 8a comporte au moins un moyen d'étanchéité (en l'espèce trois joints circonférentiels 22a, 22b, 22c) en appui sur des portées correspondantes de la surface interne 4 de l'arbre basse pression 2. Plus précisément, le joint 22b a pour fonction d'éviter une introduction d'huile ou d'air huilé dans la cavité interne 4 de la zone amont de l'arbre basse pression 2.

Des formes de réalisation alternatives vont être décrites en référence aux figures 7 à 22. Dans ces formes de réalisation, les mêmes références numériques sont utilisées pour les éléments de structure ou fonction identique, équivalente, similaire ou comparable à celles des éléments du turboréacteur des figures 1 à 6, pour simplifier la description. D'ailleurs, l'ensemble de la description du tube de dégazage des figures 1 à 6 n'est pas forcément reprise, cette description s'appliquant au tube de dégazage des figures 7 à 22 lorsqu'il n'y a pas d'incompatibilités. Seules les différences notables, structurelles et fonctionnelles, seront décrites.

En référence à la figure 7, conformément à une deuxième forme de réalisation, le tronçon amont 8a et le tronçon aval 8b sont solidarisés en rotation grâce à des cannelures longitudinales 21a', 21b' respectivement agencées sur les portions aval 14a et amont 12b de ces tronçons 8a, 8b. Ces cannelures 21a', 21b' sont engrenées de manière connue en soi pour la solidarisation en rotation des deux tronçons 8a, 8b.

Bien sûr, d'autres moyens de solidarisation en rotation et/ou en translation des tronçons 8a, 8b entre eux sont envisageables. Par exemple, leurs extrémités aval 14a et amont 12b pourraient être filetées et vissées l'une à l'autre, le blocage en rotation étant alors assuré par ailleurs.

En référence à la figure 8, conformément à une troisième forme de réalisation, une bague intermédiaire rigide 26 est montée entre la bague déformable 16 et l'extrémité aval 14a du tronçon amont 8a ; une telle bague rigide 26 permet de maintenir la bague déformable 16 en position. Elle est par exemple collée à la bague déformable 16 au niveau de leurs faces en contact. La bague rigide 26 coulisse sur le tronçon aval 8b lors du déplacement du tronçon amont 8a et de la compression de la bague déformable 16, le tronçon amont 8a transmettant ses efforts de compression à la bague 16 par l'intermédiaire de la bague rigide 26.

Par ailleurs, dans cette forme de réalisation, le tronçon aval 8b comporte, à proximité de l'extrémité amont de sa portion d'extrémité amont 12b, un joint d'étanchéité 27 logé dans une gorge et agencé pour être comprimé radialement entre le tronçon amont 8a et le tronçon aval 8b afin d'éviter une éventuelle fuite de gaz dans un possible jeu entre ces deux tronçons 8a, 8b.

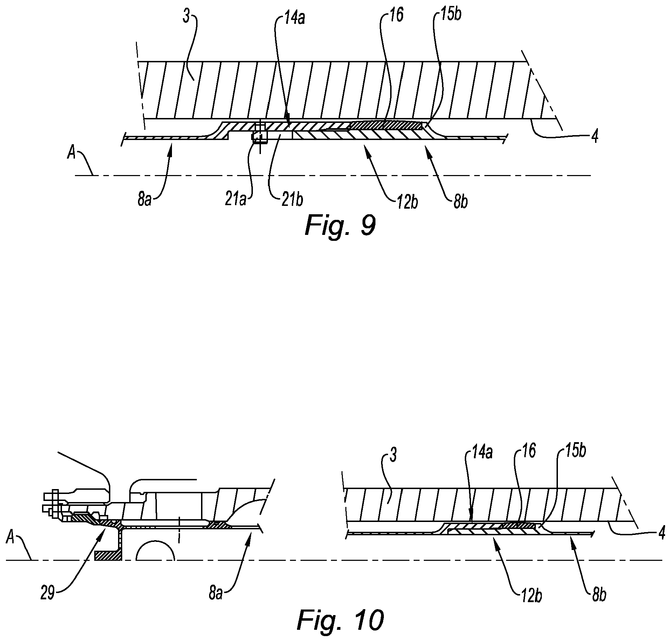

En référence à la figure 9, conformément à une quatrième forme de réalisation, les tronçons 8a, 8b comportent des moyens de solidarisation en rotation du type pion/encoche comme dans la forme de réalisation des figures 1 à 6, mais le dimensionnement des différents éléments est tel que le pion 21a est engagé dans l'encoche 21b avant compression de la bague déformable 16. L'intérêt est que le positionnement angulaire des deux tronçons 8a, 8b l'un par rapport à l'autre est plus facile à réaliser et n'est pas entravé par la compression de la bague 16 (qui pourrait gêner la rotation des tronçons 8a, 8b l'un par rapport à l'autre).

En référence à la figure 10, conformément à une cinquième forme de réalisation, les tronçons 8a, 8b ne sont pas solidarisés en rotation directement l'un à l'autre mais rendus solidaires en rotation de l'arbre basse pression 2 par des moyens indépendants. Ainsi, en l'espèce, le tronçon aval 8b est solidaire en rotation de l'arbre basse pression 2 par un système 25a de pions et évidement au niveau de sa bride de butée 25 (comme décrit en référence à la figure 2) tandis que le tronçon amont 8a est solidaire en rotation grâce à des moyens adaptés 29 au niveau de son extrémité amont, en l'espèce un agencement de pions et d'évidements (comme décrit ci-dessus) ou de crans et d'encoches au niveau de la bride de butée de son extrémité amont. Un intérêt de ne pas prévoir de moyens de blocage en rotation des tronçons 8a, 8b au niveau de leur interface est que ces tronçons 8a, 8b peuvent être montés "à l'aveugle" c'est-à-dire sans se soucier de leurs positions angulaires respectives.

L'invention a été présentée dans les formes de réalisation précédentes en relation avec un tube de dégazage 8 formé de deux tronçons 8a, 8b. Bien entendu, le tube de dégazage 8 peut comporter un nombre de tronçons 8a, 8b supérieur à deux, une zone d'appui avec l'arbre basse pression 2 pouvant être ménagée à l'interface entre chaque paire de tronçons successifs. Le nombre de tronçons choisi dépend notamment de la longueur du tube de dégazage 8 et du nombre souhaité d'appuis sur l'arbre basse pression 2. Le blocage en rotation des différents tronçons par rapport à l'arbre basse pression 2 peut être fait par blocage en rotation des tronçons successifs les uns par rapport aux autres et/ou directement entre certain(s) tronçons (ou tous) et l'arbre basse pression 2.

Par ailleurs, l'invention a été présentée avec un montage du tronçon aval 8b avant le tronçon amont 8a. En fonction de la structure du turboréacteur, cet ordre peut être inversé.

L'invention a été présentée avec une bague déformable 16 montée sur le tronçon aval 8b du tube de dégazage 8 mais il va de soi qu'elle peut être montée sur le tronçon amont 8a.

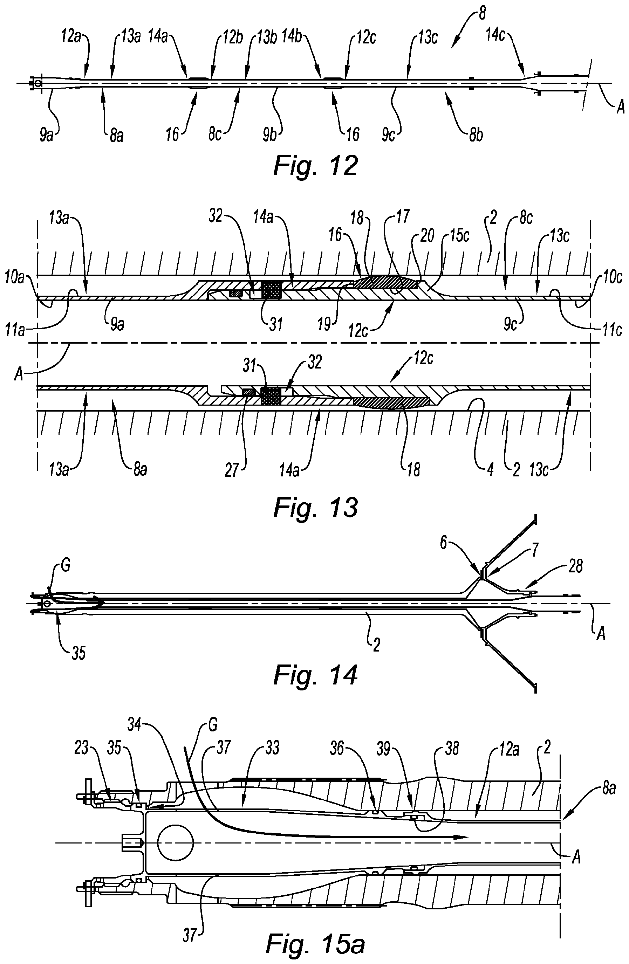

En référence à la figure 12, une sixième forme de réalisation de l'invention est présentée, dans laquelle les tronçons du tube 8 sont agencés pour pouvoir être pré-assemblés avant leur montage dans l'arbre basse pression 2. Dans la forme de réalisation décrite, le tube de dégazage 8 comporte trois tronçons, un tronçon amont 8a, un tronçon aval 8b et un tronçon intermédiaire 8c qui s'étend entre les tronçons amont 8a et aval 8b ; on peut bien sûr envisager cette forme de réalisation avec deux tronçons ou plus de trois tronçons.

De même que dans les formes de réalisation précédentes, chacun de ses tronçons 8a, 8b, 8c comporte une portion d'extrémité amont 12a, 12b, 12c, une portion centrale 13a, 13b, 13c et une portion d'extrémité aval 14a, 14b, 14c. Chacun de ses tronçons 8a, 8b, 8c est creux et comporte une paroi 9a, 9b, 9c avec une surface interne 10a, 10c et une surface externe 11a, 11c (seules les surfaces des tronçons amont 8a et intermédiaire 8c sont référencées sur les figures). La portion centrale 13a, 13b, 13c de chacun des tronçons 8a, 8b, 8c est ici de forme cylindrique et régulière, seules les portions d'extrémités amont 12a, 12b, 12c et aval 14a, 14b, 14c présentant des formes particulières pour l'assemblage à un autre tronçon ou à l'arbre basse pression 2.

Les tronçons amont 8a et intermédiaire 8c sont agencés pour être assemblés l'un avec l'autre en alignement longitudinal, c'est-à-dire aboutés l'un à l'autre et plus précisément emmanchés au niveau de leurs portions d'extrémités aval 14a et amont 12c, respectivement. Les tronçons intermédiaire 8c et aval 8b sont agencés pour être assemblés l'un avec l'autre, de la même manière, au niveau de leurs portions d'extrémités aval 14c et amont 12b, respectivement.

De même que précédemment, une bague 16 en matériau déformable est montée à chacune des interfaces entre les paires de tronçons (8a, 8c), (8c, 8b).

Conformément à la caractéristique particulière de cette sixième forme de réalisation, les tronçons 8a, 8b, 8c sont agencés pour pouvoir être assemblés les uns aux autres avant leur montage dans l'arbre basse pression 2. Par assemblage préalable des tronçons 8a, 8b, 8c, on entend que les tronçons 8a, 8b, 8c sont préalablement assemblés c'est-à-dire reliés les uns aux autres, dans des positions relatives correspondant sensiblement à leurs positions en fonctionnement hormis le fait que les bagues 16 ne sont pas encore (totalement) déformés ; on peut envisager une légère déformation préalable dans la mesure où elle n'interdit pas le montage du tube 8 dans l'arbre basse pression 2. Les bagues 16 sont déformées au cours du montage du tube 8 dans l'arbre basse pression 2 pour former des appuis sur cet arbre 2. Grâce au pré-assemblage, il est possible de manipuler le tube 8, comportant ses trois tronçons de tube 8a, 8b, 8c, de manière aisée et d'un seul bloc.

La zone d'aboutement du tronçon amont 8a et du tronçon intermédiaire 8c va maintenant être décrite, en relation avec la figure 13. Cette description s'applique *mutatis mutandis* à la zone d'aboutement entre le tronçon intermédiaire 8c et le tronçon aval 8b, ces zones d'aboutement étant en l'espèce semblables.

Plus précisément, en référence à la figure 13, le tronçon amont 8a comporte, à son extrémité aval, une jupe d'extrémité aval 14a (formant sa portion d'extrémité aval 14a) de diamètre légèrement supérieur au diamètre de sa partie centrale 13a ; plus précisément, la surface interne 10a de la paroi 9a du tronçon amont 8a au niveau de la jupe 14a est de diamètre supérieur à son diamètre dans la partie centrale 13a du tronçon 8a. L'épaisseur de la paroi 9a du tronçon 8a au niveau de la jupe 14a est également légèrement supérieure à son épaisseur dans la partie centrale 13a du tronçon 8a.

En outre, la portion d'extrémité amont 12c du tronçon intermédiaire 8c est d'épaisseur plus importante que celle de sa partie centrale 13c. Le tronçon intermédiaire 8c comporte par ailleurs, à l'extrémité aval de sa portion d'extrémité amont 12c, un rebord radial 15c.

La portion d'extrémité amont 12c du tronçon intermédiaire 8c est emmanchée dans la jupe d'extrémité aval 14a du tronçon amont 8a, le diamètre de la surface interne 10a de la paroi 9a du tronçon amont 8a au niveau de sa jupe 14a étant sensiblement égal (légèrement supérieur) au diamètre de la surface externe 11c de la paroi 9c du tronçon intermédiaire 8c au niveau de sa portion d'extrémité amont 12c.

Une bague 16 en matériau déformable est montée à l'interface entre les tronçons 8a, 8c. La bague 16 présente une surface interne 17, une surface externe 18, une surface amont 19 et une surface aval 20. En l'espèce, la bague 16 est préformée pour que sa surface externe 18 présente une forme bombée. Plus précisément en l'espèce, la bague 16 est emmanchée sur la portion d'extrémité amont 12c du tronçon intermédiaire 8c, sa surface aval 20 en appui (et en l'espèce collée) sur la surface amont du rebord 15c. La bague 16 peut être montée à force sur le tronçon intermédiaire 8c ou montée avec jeu, avec ou sans collage.

Les tronçons amont 8a et intermédiaire 8c sont assemblés l'un à l'autre à l'aide de pions 31, en l'espèce au nombre de trois répartis régulièrement angulairement. Chaque pion 31 est solidaire de la jupe aval 14a du tronçon amont 8a et est, à cet effet, monté à force dans un orifice de cette dernière. Il est par ailleurs reçu dans un logement formant glissière 32 ménagé dans la surface en regard de la portion amont 12c du tronçon intermédiaire 8c ; cette glissière 32 permet aux tronçons 8a, 8c de coulisser l'un par rapport à l'autre mais seulement dans la dimension longitudinale de la glissière 32. Ainsi, grâce aux pions 31, les tronçons 8a, 8c sont assemblés l'un à l'autre, bloqués en rotation l'un à l'autre et libres de coulisser l'un par rapport à l'autre mais uniquement selon un débattement correspondant à la longueur de la glissière 32. Un joint d'étanchéité 27 est logé dans une gorge et agencé pour être comprimé radialement entre le tronçon amont 8a et le tronçon intermédiaire 8c afin d'éviter une éventuelle fuite de gaz dans un possible jeu entre ces deux tronçons 8a, 8c.

Le tube 8 avec ses tronçons 8a, 8b, 8c assemblés peut être manipulé comme un objet unitaire dont les différents composants sont reliés les uns aux autres, le seul degré de liberté étant la translation longitudinale entre les tronçons 8a, 8b, 8c mais uniquement dans la dimension de la glissière 32. La manipulation du tube 8 comme un seul bloc est donc aisée, ce qui facilite son montage dans l'arbre basse pression 2.

Comme on le voit sur la figure 13, lorsque le tube 8 est enfilé dans l'arbre 2, les bagues 16 ne sont pas comprimées, leurs surfaces extérieures 18 présentant donc un diamètre extérieur maximal inférieur au diamètre de la surface interne 4 de l'arbre basse pression 2. Puis, au cours de son montage dans l'arbre 2, le tube 8 est contraint longitudinalement, ce qui amène les tronçons 8a, 8b, 8c à se rapprocher les uns des autres et à comprimer les bagues 16 à leurs interfaces, ces bagues 16 venant ainsi former des appuis sur la surface interne 4 de l'arbre basse pression 2, de même que dans les formes de réalisations précédentes.

De même que précédemment, des joints circonférentiels sont agencées pour venir en appui sur des portées correspondantes de la surface interne 4 de l'arbre basse pression 2 et plus précisément notamment sur le tourillon 28 de turbine basse pression le relié à l'arbre basse pression 2 par l'intermédiaire des brides de fixation 6, 7.

On note par ailleurs en l'espèce que le tube 8 est fixé, de son côté amont (qui correspond à la portion amont 12a du tronçon amont 8a), à un embout amont 33 destiné à être fixé du côté amont de l'arbre basse pression 2. L'embout 33 comporte des moyens (par exemple des ergots) 34 anti-rotation agencés pour coopérer avec des moyens correspondants (par exemple des logements) de l'arbre basse pression 2 pour fixer la position angulaire de l'embout 33 par rapport à l'arbre basse pression 2. L'embout 33 comporte par ailleurs des joints 35, 36 d'étanchéité, l'un 35 du côté amont de l'embout 33, l'autre 36 de son côté aval, de part et d'autre d'ouvertures 37 permettant le passage des gaz G en provenance de l'enceinte d'huile amont E1 du turboréacteur 1. L'embout 33 est fixé à l'arbre basse pression 2 à l'aide d'un écrou amont 23.

On note incidemment que l'embout 33 est ici une pièce distincte du tube 8, contrairement aux formes de réalisation décrites en relation avec les figures 1 à 11 dans lesquelles cet embout est directement formé par le tronçon amont du tube 8, monobloc avec lui.

La portion amont 12a du tronçon amont 8a est emmanchée sur la portion aval l'embout amont 33, l'extrémité de la portion amont 12a du tronçon amont 8a comportant des bossages de montage 39 permettant de consolider la position de tous les éléments, en mettant le tronçon amont 8a en pression entre l'arbre basse pression 2 et l'embout amont 33 ; la dimension radiale de ces bossages 39 est en l'espèce de 0,56mm. Un joint d'étanchéité 38 est prévu entre l'embout amont 33 et le tronçon amont 8a.

Le procédé de montage est, de manière simplifié, le suivant :
- les tronçons 8a, 8b, 8c du tube 8 sont assemblés les uns aux autres ;
- l'embout amont 33 est monté depuis le côté amont de l'arbre basse pression 2 et fixé en position grâce à l'écrou amont 23 ;
- le tube 8 est monté depuis le côté aval de l'arbre basse pression 2, les tronçons 8a, 8b, 8c forcés à coulisser les uns par rapport aux autres dans la dimension des glissières 32 (en l'espèce de longueurs identiques) pour comprimer les bagues 16 et les déformer pour qu'elles ménagent des points d'appui sur l'arbre basse pression 2 ;
- le tube 8 est fixé en position par son extrémité aval, permettant de finaliser le montage.

Du côté aval, la fixation se fait de préférence grâce à des moyens anti-rotation, en l'espèce des ergots 45, de la portion aval 14b du tronçon aval 8b, agencés pour coopérer avec des moyens anti-rotation, en l'espèce des logements correspondants 46, de l'arbre basse pression 2.

Le déplacement des tronçons 8a, 8b, 8c les uns par rapport aux autres est en l'espèce obtenu grâce à un écrou aval 47 permettant, par son vissage, de pousser le tronçon aval 8b du tube 8 vers l'amont et donc de comprimer les bagues 16 contre l'arbre basse pression 2. Une fois l'écrou aval 47 complètement vissé, l'ensemble est fixé en position, les ergots anti-rotation 45 étant bloqués dans les évidements correspondants 46 de l'arbre pression 2.

Les différents éléments anti-rotation prévus sur les diverses pièces du montage permettent d'éviter tout risque de torsion de ces pièces, notamment des tronçons 8a, 8b, 8c.

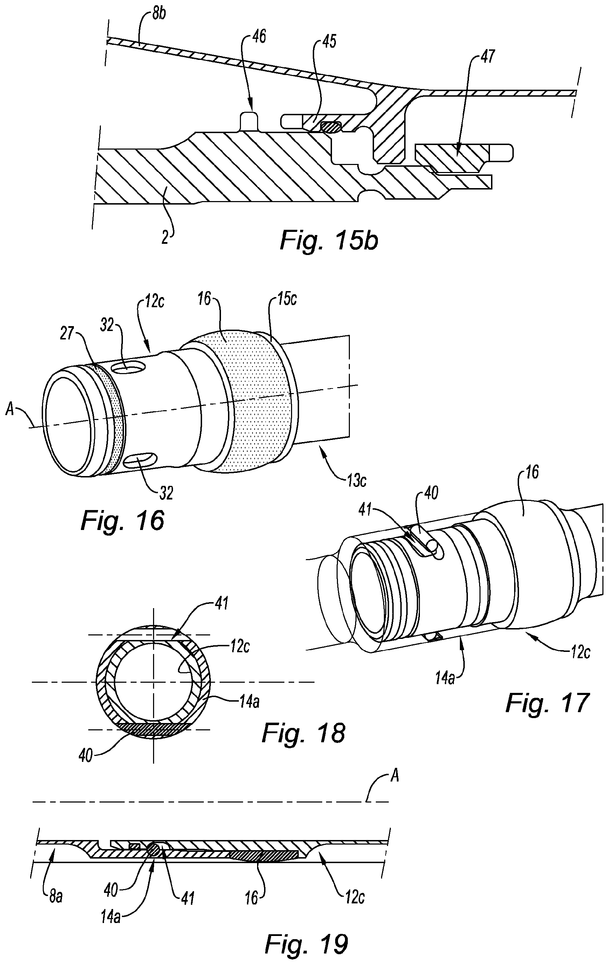

En référence aux figures 17 à 19, on décrit un moyen équivalent aux pions 31 de la forme de réalisation des figures 12 à 16. Dans cette forme de réalisation, des joncs transversaux 40 sont fixés à force dans des logements correspondants de la portion aval 14a du tronçon amont 8a (ou de la portion aval 14c du tronçon intermédiaire 8c), ces joncs 40 étant agencés pour être reçus dans des logements 41 formant glissières ménagées dans la portion amont 12c du tronçon intermédiaire 8c (ou dans la portion amont 12b du tronçon aval 8b). De même que précédemment, la coopération des joncs 40 avec leurs logements 41 permet de solidariser les tronçons 8a, 8c en rotation et en translation avec une liberté de mouvement dans la dimension longitudinale des logements formant glissières 41. En l'espèce, le tube 8 comporte, au niveau de chaque interface entre deux tronçons (8a, 8c), (8c, 8b), deux joncs 40 diamétralement opposés ; un seul jonc ou plus de deux joncs pourraient être prévus.

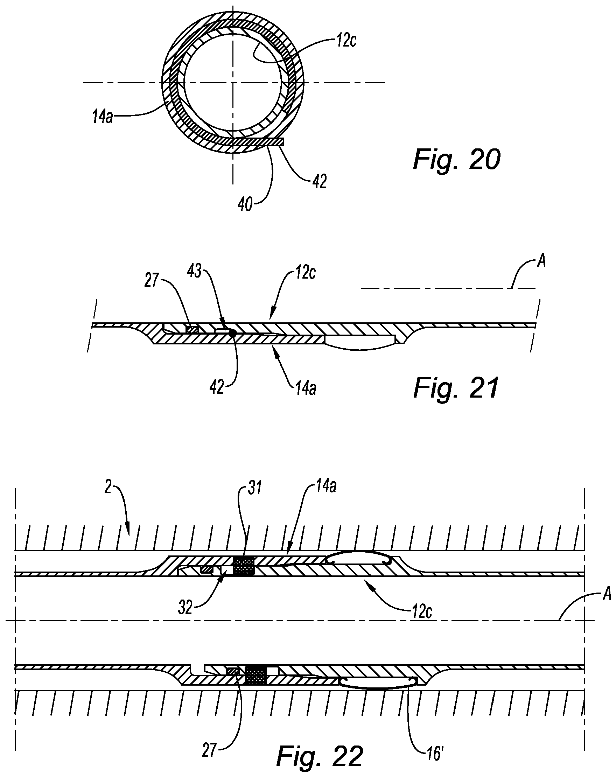

En référence aux figures 20 et 21, on décrit un autre moyen équivalent aux pions 31 de la forme de réalisation des figures 12 à 16. Dans cette forme de réalisation, un jonc torique 42 est fixé un logement périphérique correspondant de la portion aval 14a du tronçon amont 8a (ou de la portion aval 14c du tronçon intermédiaire 8c), ce jonc 42 est agencé pour être reçu dans un logement 43 formant glissière ménagée dans la portion amont 12c du tronçon intermédiaire 8c (ou dans la portion amont 12b du tronçon aval 8b). Le jonc torique 42 en enroulé dans son logement par un orifice 44 et s'étend circonférentiellement (et donc circulairement) une fois en position (on le voit sur la figure 20 en cours d'enroulement). La coopération du jonc 42 avec son logement 43 permet de solidariser les tronçons 8a, 8c en translation avec une liberté de mouvement dans la dimension longitudinale de la glissière 41. L'arrêt en rotation des tronçons 8a, 8c l'un par rapport à l'autre est en l'espèce assuré lorsque l'ensemble du tube de dégazage 8 et l'embout 33 sont définitivement serrés par les écrous amont 23 et aval 47, de sorte que la bague déformable 16 est en appui sur la surface interne 4 de l'arbre de turbine 2, bloquant ainsi le degré de rotation des tubes 8a, 8c.

La forme de réalisation de la figure 22 est identique à celle des figures 12 à 16, à la seule différence que le moyen déformable n'est pas formé en élastomère mais en matériau métallique déformable. Il s'agit en l'espèce d'un joint d'appui métallique 16', se présentant en l'espèce sous la forme d'une lame métallique annulaire bombée 16' ; ce joint d'appui métallique 16' est ainsi de forme annulaire creuse et comporte une paroi bombée entre deux bords recourbés annulaires 16'a, 16'b. Sous l'action d'une contrainte longitudinale (entre tronçons adjacents (8a, 8c), (8c, 8b)), le joint d'appui métallique 16' se déforme radialement (passant de sa forme du bas de la figure 22 à sa forme du haut de la figure 22) pour former un appui radial sur l'arbre basse pression. Puisqu'il est métallique, le joint d'appui métallique 16' peut résister à des températures importantes ; il peut par exemple être formé en alliage de nickel comme l'Inconel X750 (marque déposée), qui peut supporter des températures de l'ordre de 500 ou 600°C. Une telle réalisation du moyen déformable 16, 16' entre deux tronçons (8a, 8b), (8a, 8c), (8b, 8c) est bien sûr applicable à toutes les formes de réalisation décrites. Le choix du matériau des bagues 16, 16' permet de couvrir une large plage de température d'utilisation possible, depuis une température froide jusqu'à une température en l'espèce sensiblement égale à 600°.

Dans les diverses formes de réalisation, les différents joints toriques d'appui pour les tronçons 8a, 8b, 8c du tube 8 ou son embout amont 33 peuvent également être remplacés par des joints d'appui métalliques, par exemple formés en fonte, permettant de couvrir des températures jusqu'à environ 600°C.

L'invention a été décrite en relation avec des formes de réalisations préférées, mais il va de soi que d'autres formes de réalisations sont envisageables. En particulier, les caractéristiques des différentes formes de réalisations décrites peuvent être combinées entre elles, s'il n'y a pas d'incompatibilités et en respectant la portée des revendications.

## Revendications

1. Tube dit de dégazage pour le guidage d'un flux de gaz dans un turboréacteur (1) comportant au moins un arbre rotatif creux (2) au sein duquel est destiné à être monté ledit tube, le tube s'étendant globalement suivant un axe (A), tube **caractérisé par le fait qu'**il comporte au moins deux tronçons de tube (8a, 8b) agencés pour être assemblés l'un à l'autre en alignement longitudinal en conservant un degré de liberté dans leur translation relative, au moins un tronçon (8b) étant pourvu de moyens déformables (16) agencés pour se déformer radialement lors du serrage l'un contre l'autre des tronçons de tube (8a, 8b) dans l'arbre (2) du turboréacteur (1), pour venir en appui sur l'arbre (2).

2. Tube selon la revendication précédente dans lequel les moyens déformables (16) présentent, avant montage, un diamètre (R1) inférieur au diamètre interne (R2) de l'arbre (2) de façon à générer un jeu avec ledit arbre basse pression au montage.

3. Tube selon l'une des revendications précédentes dans lequel les moyens déformables (16) comportent une bague (16) formée en matériau déformable, par exemple en matériau métallique déformable.

4. Tube selon la revendication précédente dans lequel une extrémité (12b) d'un premier tronçon (8b) comporte un rebord radial (15b) d'appui pour la bague (16) et un second tronçon (8a) comporte une portion d'extrémité (14a) agencée pour venir en appui sur la bague (16) pour la comprimer longitudinalement contre le rebord radial (15b) et ainsi la déformer radialement.

5. Tube selon l'une des revendications précédentes dans lequel les tronçons (8a, 8b) comportent des moyens ((21a, 21b), (21a', 21b')) de blocage en rotation l'un par rapport à l'autre (ou les uns par rapport aux autres) en position assemblée.

6. Turboréacteur comportant au moins un arbre rotatif creux (2) au sein duquel est destiné à être monté un tube (8) dit de dégazage pour le guidage d'un flux de gaz, le tube (8) s'étendant globalement suivant un axe (A), tube (8) **caractérisé par le fait qu'**il comporte les caractéristiques du tube de l'une des revendications précédentes.

7. Procédé de montage d'un tube (8) dit de dégazage pour le guidage d'un flux de gaz au sein d'un arbre rotatif creux (2) d'un turboréacteur (1), le tube (8) étant destiné à s'étendre globalement suivant un axe (A) et comportant au moins deux tronçons de tube (8a, 8b) agencés pour être assemblés l'un à l'autre en alignement longitudinal en conservant un degré de liberté dans leur translation relative, au moins un tronçon (8b) étant pourvu de moyens déformables (16) agencés pour se déformer radialement lors du serrage l'un contre l'autre des tronçons de tube (8a, 8b), procédé **caractérisé par le fait qu'**il comporte les étapes suivantes :
- on monte le tube (8a, 8b) au sein de l'arbre (2) et
- on déforme radialement, par serrage desdits tronçons l'un contre l'autre, les moyens déformables (16) jusqu'à ce qu'ils viennent en appui sur l'arbre (2) du turboréacteur (1) pour le maintien du tube (8) dans ce dernier.

8. Procédé selon la revendication 7 dans lequel on assemble les tronçons de tube (8a, 8b) l'un à l'autre concomitamment à leur montage dans l'arbre (2) et on déforme les moyens déformables (16) au cours de cet assemblage.

9. Procédé selon la revendication 7 dans lequel on assemble les tronçons de tube (8a, 8b) l'un à l'autre préalablement à leur montage dans l'arbre (2).

10. Procédé selon la revendication précédente **caractérisé par le fait qu'**il est mis en oeuvre avec le tube de l'une des revendications 1 à 5.

## Patentansprüche

1. Sogenanntes Entgasungsrohr zum Führen eines Gasstroms in ein Turbostrahltriebwerk (1), mindestens eine hohle drehbare Welle (2) beinhaltend, in der das Rohr dazu bestimmt ist, montiert zu werden, wobei sich das Rohr im Allgemeinen entlang einer Achse (A) erstreckt, das Rohr **dadurch gekennzeichnet ist, dass** es mindestens zwei Rohrabschnitte (8a, 8b) beinhaltet, die angeordnet sind, um miteinander in Längsausrichtung verbunden zu werden, während sie einen Freiheitsgrad bei ihrer Relativverschiebung behalten, wobei mindestens ein Abschnitt (8b) mit verformbaren Mitteln (16) versehen ist, die angeordnet sind, um sich beim gegenseitigen Festklemmen der Rohrabschnitte (8a, 8b) in der Welle (2) des Turbostrahltriebwerks (1) radial zu verformen, um zur Anlage an der Welle (2) zu kommen.

2. Rohr nach dem vorstehenden Anspruch, wobei die verformbaren Mittel (16) vor Montage einen Durchmesser (R1) aufweisen, der kleiner ist als der innere Durchmesser (R2) der Welle (2), um bei Montage ein Spiel zur Niederdruckwelle zu erzeugen.

3. Rohr nach einem der vorstehenden Ansprüche, wobei die verformbaren Mittel (16) einen Ring (16) beinhalten, der aus verformbarem Material, zum Beispiel aus metallischem verformbarem Material, gebildet ist.

4. Rohr nach dem vorstehenden Anspruch, wobei ein Ende (12b) eines ersten Abschnitts (8b) einen radialen Anlagerand (15b) für den Ring (16) beinhaltet und ein zweiter Abschnitt (8a) einen Endbereich (14a) beinhaltet, der zur Anlage an dem Ring (16) angeordnet ist, um ihn in der Längsrichtung gegen den radialen Rand (15b) zu pressen und ihn so radial zu verformen.

5. Rohr nach einem der vorstehenden Ansprüche, wobei die Abschnitte (8a, 8b) Sperrmittel ((21a, 21b), (21a', 21b')) beinhalten, die zueinander (oder die einen relativ zu den anderen) in verbundener Position drehbar sind.

6. Turbostrahltriebwerk, mindestens eine hohle drehbare Welle (2) beinhaltend, in der ein sogenanntes Entgasungsrohr (8) zum Führen eines Gasstroms dazu bestimmt ist, montiert zu werden, wobei sich das Rohr (8) im Allgemeinen entlang einer Achse (A) erstreckt, das Rohr (8) **dadurch gekennzeichnet ist, dass** es die Eigenschaften des Rohrs von einem der vorstehenden Ansprüche beinhaltet.

7. Verfahren zur Montage eines sogenannten Entgasungsrohrs (8) zum Führen eines Gasstroms innerhalb einer hohlen drehbaren Welle (2) eines Turbostrahltriebwerks (1), wobei das Rohr (8) dazu bestimmt ist, sich im Allgemeinen entlang einer Achse (A) zu erstrecken, und mindestens zwei Rohrabschnitte (8a, 8b) beinhaltet, die angeordnet sind, um miteinander in Längsausrichtung verbunden zu werden, während sie einen Freiheitsgrad bei ihrer Relativverschiebung behalten, wobei mindestens ein Abschnitt (8b) mit verformbaren Mitteln (16) versehen ist, die angeordnet sind, um sich beim gegenseitigen Festklemmen der Rohrabschnitte (8a, 8b) radial zu verformen, wobei das Verfahren **dadurch gekennzeichnet ist, dass** es die folgenden Schritte beinhaltet:
- Montieren des Rohrs (8a, 8b) innerhalb der Welle (2) und
- radiales Verformen, durch gegenseitiges Festklemmen der Abschnitte, der verformbaren Mittel (16) bis sie zur Anlage an der Welle (2) des Turbostrahltriebwerks (1) zum Festhalten des Rohrs (8) in Letzterem kommen.

8. Verfahren nach Anspruch 7, wobei die Rohrabschnitte (8a, 8b) gleichzeitig zu ihrer Montage in der Welle (2) miteinander verbunden werden und die verformbaren Mittel (16) im Laufe dieser Verbindung verformt werden.

9. Verfahren nach Anspruch 7, wobei die Rohrabschnitte (8a, 8b) vor ihrer Montage in der Welle (2) miteinander verbunden werden.

10. Verfahren nach dem vorstehenden Anspruch, **dadurch gekennzeichnet, dass** es mit dem Rohr von einem der Ansprüche 1 bis 5 durchgeführt wird.

## Claims

1. A pipe referred to as a venting pipe for guiding a gas flow in a turbojet (1) comprising at least one hollow rotary shaft (2) inside which said pipe is intended to be mounted, the pipe extending overall along an axis (A), which pipe is **characterized in that** it comprises at least two pipe segments (8a, 8b) arranged in order to be assembled with one another in longitudinal alignment while retaining a degree of freedom in their relative translation, at least one segment (8b) being provided with deformable means (16) arranged in order to deform radially when the pipe segments (8a, 8b) are tightened against one another in the shaft (2) of the turbojet (1), in order to bear on the shaft (2).

2. The pipe as claimed in the preceding claim, wherein the deformable means (16) have, before mounting, a diameter (RI) less than the internal diameter (R2) of the shaft (2) so as to be mounted with clearance in the low-pressure shaft (2).

3. The pipe as claimed in one of the preceding claims, wherein the deformable means (16) comprise a ring (16) formed from deformable material, for example deformable metallic material.

4. The pipe as claimed in the preceding claim, wherein one end (12b) of a first segment (8b) comprises a radial bearing edge (15b) for the ring (16) and a second segment (8a) comprises an end portion (14a) arranged in order to bear on the ring (16) in order to compress it longitudinally against the radial edge (15b) and thus deform it radially.

5. The pipe as claimed in one of the preceding claims, wherein the segments (8a, 8b) comprise means ((21a, 21b), (21a', 21b')) for blocking in rotation with respect to each other (or one another) in the assembled position.

6. A turbojet comprising at least one hollow rotary shaft (2) inside which a pipe (8) referred to as a venting pipe for guiding a gas flow is intended to be mounted, the pipe (8) extending overall along an axis (A), which pipe (8) is **characterized in that** it comprises the characteristics of the pipe of one of the preceding claims.

7. A method for mounting a pipe (8) referred to as a venting pipe, for guiding a gas flow inside a hollow rotary shaft (2) of a turbojet (1), the pipe (8) being intended to extend overall along an axis (A) and comprising at least two pipe segments (8a, 8b) arranged in order to be assembled with one another in longitudinal alignment while retaining a degree of freedom in their relative translation, at least one segment (8b) being provided with deformable means (16), which method is **characterized in that** it comprises the following steps:
- the pipe (8a, 8b) is mounted inside the shaft (2) and
- the deformable means (16) are radially deformed by tightening said segments against one another, until they bear on the shaft (2) of the turbojet (1) in order to hold the pipe (8) therein.

8. The method as claimed in claim 7, wherein the pipe segments (8a, 8b) are assembled with one another jointly with their mounting in the shaft (2), and the deformable means (16) are deformed during this assembly.

9. The method as claimed in claim 7, wherein the pipe segments (8a, 8b) are assembled with one another prior to their mounting in the shaft (2).

10. The method as claimed in the preceding claim, **characterized in that** it is carried out with the pipe of one of claims 1 to 5.
